# EUROPÄISCHE PATENTSCHRIFT

(11) **EP 1 555 469 B1**
(45) Veröffentlichungstag und Bekanntmachung des Hinweises auf die Patenterteilung: **13.09.2006**
(21) Anmeldenummer: 04025737.0
(22) Anmeldetag: 29.10.2004
(51) Int. Cl.: F16K 15/14, F16K 15/16, F04B 53/10

(54) **Ventil**
Valve
Soupape

(30) Priorität: 15.01.2004 DE 102004002078
(43) Veröffentlichungstag der Anmeldung: 20.07.2005
(73) Patentinhaber: KNF FLODOS AG, 6210 Sursee (CH)
(72) Erfinder: Käch, Robert, 6210 Sursee (CH); Kissling, Christian, 4629 Fulenbach (CH)
(74) Vertreter: Maucher, Wolfgang

(56) Entgegenhaltungen:
- EP-A- 1 253 320
- US-A- 3 123 096
- US-A- 4 182 355
- US-A1- 2003 089 409

## Beschreibung

Die Erfindung bezieht sich auf ein Ventil, insbesondere ein Plattenventil beispielsweise für Membranpumpen, mit einer Ventilplatte, einem Ventilsitz und einem von einem Ventilgehäuse umgrenzten Ventilraum, wobei die Ventilplatte randseitig gehalten ist.

Derartige Ventile sind bereits bekannt. Die bei Plattenventilen verwendete Ventilplatte hat in Kombination mit dem Ventilsitz die Aufgabe, eine passive, durch Strömung und Druckunterschied hervorgerufene Ventilfunktion bereitzustellen, wie dies bei Membranpumpen oder Rückschlagventilen erforderlich ist.
Bei den bereits bekannten Ventilen erfüllt die Ventilplatte neben ihrer eigentlichen Funktion, nämlich dem Abdichten mit dem Ventilsitz, noch zusätzliche Funktionen, wie beispielsweise das Abdichten des Ventilgehäuses nach außen. Dafür sind an der Ventilplatte Bereiche vorhanden, die diese Funktionen erfüllen. Insbesondere beim Einbau solcher mit einer derartigen Dichtfunktion kombinierter Ventilplatten kann sich beim Einbau infolge Quetschung bei den Dichtbereichen nach außen vor allem durch die fehlende Komprimierbarkeit des zumeist eingesetzten Gummis eine undefinierte Einbaulage oder Verspannung der eigentlichen Ventilplatte ergeben. Lösungen, diese Verspannungen mittels Entlastungsnuten zu verringern sind bekannt, reichen jedoch insbesondere bei Kleinpumpen oder Kleinstpumpen und den dabei nötigen geringen Toleranzen nicht aus. In diesem Bereich haben schon kleinste Maßabweichungen nachteilige Auswirkungen auf die korrekte Ventilfunktion, das heißt auf die korrekte Position der Ventilplatte relativ zum Ventilsitz und der Dichtheit beider Elemente.

US 3 123 096 beschreibt ein Plattenventil gemäß dem Oberbegriff des Anspruchs 1.

Es besteht daher die Aufgabe, ein Ventil zu schaffen, welches insbesondere bei Kleinpumpen oder Kleinstpumpen einsetzbar und dabei wiederholbar leicht und fehlerfrei montierbar ist.

Zur Lösung dieser Aufgabe wird einerseits vorgeschlagen, dass die Ventilplatte in Einbaulage innerhalb ihrer Plattenebene elastisch auf Zug vorgespannt ist und dass die elastische Vorspannung mindestens so groß ist, dass durch eine Randeinspannung auftretende Verformungen kompensiert werden.
Dadurch wird wirksam verhindert, dass sich auftretende Materialverdrängungen beim randseitigen Einspannen der Ventilplatte nachteilig auf die Lage des mit dem Ventilsitz zusammenarbeitenden Teils der Ventilplatte auswirken. Auch bei der bei solchen Pumpen vorhandenen, räumlichen Enge und dem geringen Abstand zwischen dem mit dem Ventilsitz zusammenarbeitenden aktiven Teil der Ventilplatte, der nicht verformt werden darf und seiner äußeren Einspannzone, wird durch die erfindungsgemäße Maßnahme ohne zusätzlichen Platzbedarf eine gleichbleibend korrekte Einspannung der Ventilplatte erreicht.

Nach einem weiteren, selbständigen Vorschlag der Erfindung ist vorgesehen, dass die Ventilplatte randseitig formschlüssig gehalten ist und zwischen ihren äußeren Randhalterungen in Einbaulage elastisch auf Zug vorgespannt ist.
Bei dieser Ausführungsform werden randseitige Verformungen von vorne herein durch das formschlüssige Halten vermieden. Es tritt somit keine randseitige Quetschdruckbeaufschlagung, die zu einer Materialverdrängung in den aktiven Bereich der Ventilplatte führen kann, auf.
Die Zugvorspannung der Ventilplatte führt dazu, dass diese unbelastet eine definierte Ausgangslage einnimmt. Es ergibt sich somit nach einer Auslenkung der Ventilplatte durch eine Druckdifferenz eine Zwangsrückführung in die Ausgangsposition im Betrieb und eine Dichtfunktion im Stillstand, durch den in erwünschter Weise ein Rückfluss von Fördermedium verhindert wird.
Unterstützt wird diese Dichtfunktion, wenn der Ventilsitz über die Ebene der randseitigen Halterung der Ventilplatte übersteht, also etwas versetzt zur Ventilplatte ist, so dass die Ventilplatte den Ventilsitz in Ruhestellung des Ventils beaufschlagt. Bei gleichzeitiger Zugvorspannung in der Ebene der Ventilplatte entsteht somit ein Kraftvektor in Richtung Ventilsitz, so dass eine verbesserte Dichtwirkung zwischen Ventilplatte und Ventilsitz auch bei kleinsten Druckdifferenzen oder im Stillstand der Pumpe erreicht wird.

Zweckmäßigerweise weist die Ventilplatte einen plattenförmigen Schließkörper und mit diesem verbundene seitliche Ventilplatten-Stege mit an deren Enden befindlichen Ankerelementen zur Halterung in beziehungsweise an dem Ventilgehäuse auf.
Damit ist der Schließkörper über die Ventilplatten-Stege mit den Ankerelementen verbunden und somit auch durch geringe Druckdifferenzen leicht zwischen der Offenstellung und der Schließstellung beweglich aufgehängt. Erwähnt sei hierbei, dass es genügt, wenn die vorgesehene Zugvorspannung eine elastische Verformung im wesentlichen in den Stegen bewirkt. Dies wird durch den geringeren Querschnitt der Stege gegenüber dem Schließkörper begünstigt, kann gezielt aber auch durch Materialunterschiede und/oder Dickenunterschiede im Querverlauf der Ventilplatte erreicht werden. Beispielsweise könnten die Stege aus elastischem Material und die Ventilplatte aus demgegenüber unelastischerem oder sogar unelastischem Material bestehen.

Nach einer bevorzugten Ausführungsform sind wenigstens zwei Ventilstege vorgesehen, vorzugsweise zwei diametral an dem Schließkörper gegenüberliegend angeordnete Ventilstege, die jeweils mit einem Ankerelement versehen sind.
Die seitlichen Stege und die Ankerelemente sind dabei mit dem Schließkörper als Bestandteile der Ventilplatte einstückig verbunden. Die Ventilplatte kann beispielsweise aus einem Gummiteil oder einem aus gummielastischem Material gebildeten Teil bestehen.

Für eine formschlüssige Halterung der Ventilplatte weisen die Ankerelemente eine gegenüber dem Ventilsteg abgewinkelte oder aufgedickte Form auf und sind zusammen mit dem jeweiligen Ventilsteg insbesondere L-förmig, T-förmig oder dergleichen ankerförmig oder etwa kreis- oder kugelförmig ausgebildet.
Die jeweils verwendete Ausbildung der Ankerelemente richtet sich unter anderem nach den vorhandenen Platzverhältnissen.

Zur Erzeugung einer elastischen Zugvorspannung innerhalb der Plattenebene ist eine zum Ventil gehörende Halterung für die Ventilplatte vorgesehen, die Aufnahmen für die Ankerelemente der Ventilplatte aufweist, wobei der Abstand der Ankerelemente-Aufnahmen größer ist als der Abstand der Ankerelemente der Ventilplatte in entspannter Lage. Die Zugspannung wird beim Einsetzen der Ventilplatte in die Halterung aufgebaut.
Das Maß des Versatzes des Ventilsitzes gegenüber der ebenen Spannposition der Ventilplatte zwischen den Aufnahmeelementen kann vergleichsweise gering sein.

Nachfolgend sind Ausführungsbeispiele der Erfindung noch näher beschrieben. Es zeigt in zum Teil schematisierter Darstellung:
- Fig. 1: eine perspektivische Darstellung eines Teils einer Membranpumpe mit offenem Pumpenkopf und darin befindlichen Teilen eines Auslassventils und eines Einlassventils,
- Fig. 2: eine schematische Darstellung eines Ventils im Längsschnitt mit einer in einem Ventilgehäuse eingespannten Ventilplatte in Schließ- oder Ruhestellung,
- Fig. 3: eine Aufsicht einer formschlüssig gehaltenen Ventilplatte,
- Fig. 4: eine Aufsicht einer Ventilplatte mit Schließkörper, Stegen und Ankerelementen,
- Fig. 5 und Fig. 6: unterschiedliche Ankerelemente einer Ventilplatte,
- Fig. 7: eine Ankerelemente-Aufnahme mit in Spannstellung befindlichem Ankerelement und
- Fig. 8: eine perspektivische Ansicht der in Fig. 4
gezeigten Ventilplatte.

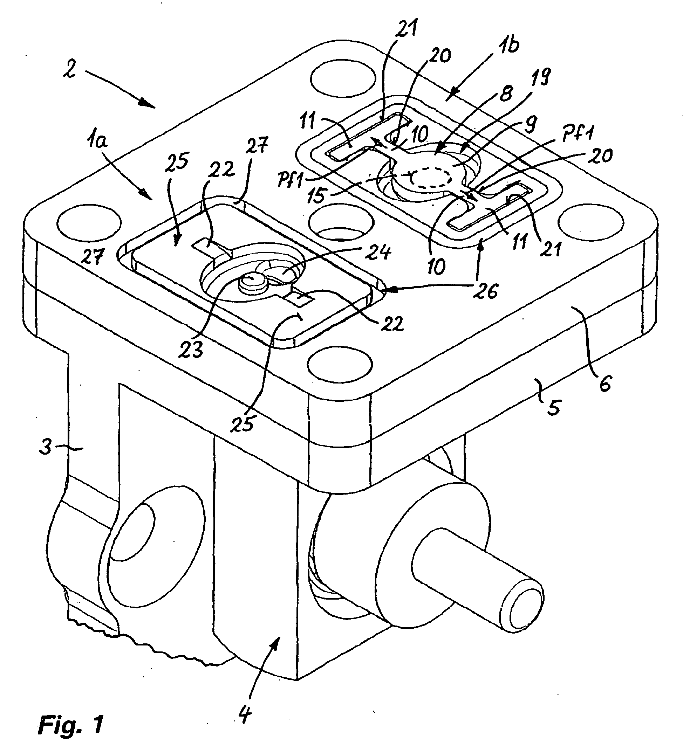

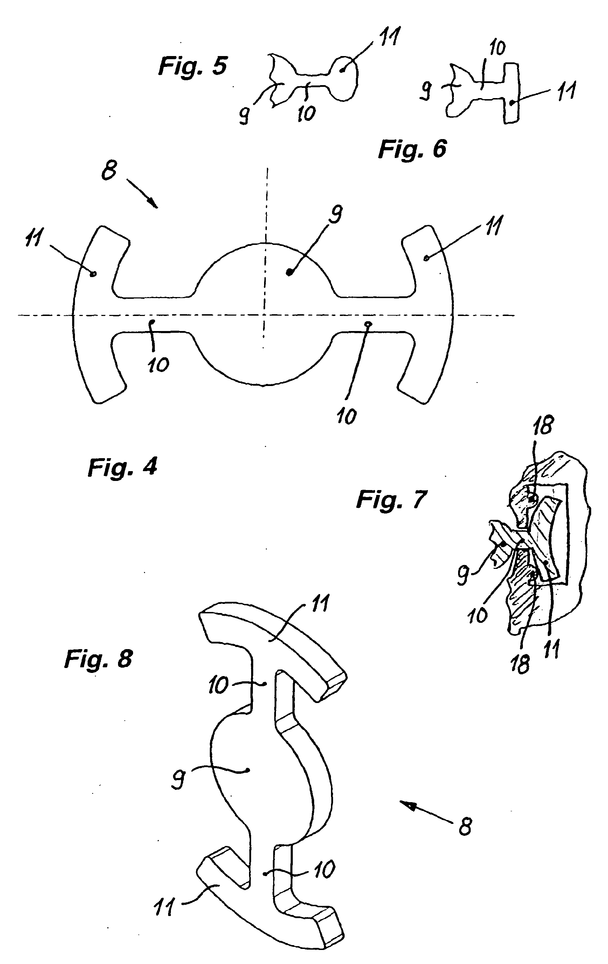

Von einem erfindungsgemäßen Ventil ist in Fig. 1 jeweils ein Teil eines Einlassventils 1a sowie eines Auslassventils 1b gezeigt. Diese Ventile sind Teil eines Pumpenkopfes 2 einer zum Teil dargestellten Membranpumpe, von der ein Teil des Motor-Gehäuses 3 sowie der Hubantrieb 4 erkennbar sind. Das Motor-Gehäuse 3 weist einen Anschlussflansch 5 auf, an dem der die Ventile beinhaltende Pumpenkopf 2 befestigt ist. Dieser Pumpenkopf 2 weist entsprechend der Umrissform des Anschlussflansches 5 geformte Kopfplatten auf, von denen im Ausführungsbeispiel gemäß Fig. 1 nur eine Basisplatte 6 erkennbar ist. Nicht dargestellt ist eine auf die Basisplatte 6 aufsetzbare Abdeckplatte, die der Basisplatte 6 zugewandt ebenfalls Teile des Einlassventils 1a und Teile des Auslassventils 1b aufweist, so dass jeweils die paarweise gegenüberstehenden Teile in den beiden Platten jeweils zusammen mit einer Ventilplatte 8 ein komplettes Ventil bilden.
Die Ventile weisen die in Fig. 1 bis 4 und Fig. 8 erkennbare Ventilplatte 8 auf, die in Einbaulage elastisch auf Zug vorgespannt ist, wie dies durch die Pfeile Pf1 in den Fig. 1 bis 3 angedeutet ist. Die Ventilplatte 8 besteht im wesentlichen aus einem zentralen Schließkörper 9, an den sich zwei diametral am Schließkörper 9 angreifende Ventilstege 10 anschließen, die an ihren äußeren Enden Ankerelemente 11 aufweisen (Fig.4).

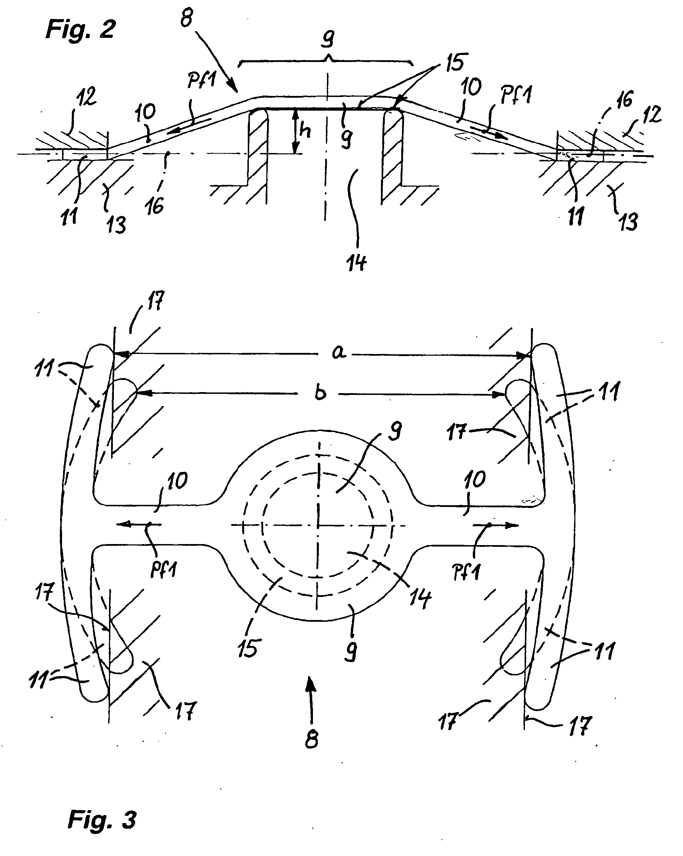

In Fig. 2 sind Ankerelemente 11 dargestellt, die durch Verlängerungen der Ventilstege 10 gebildet sind und die zwischen zwei Gehäuseteilen 12 und 13 eingespannt sind. Die Gehäuseteile 12 und 13 können durch zwei Kopfplatten, insbesondere die Basisplatte 6 und die Abdeckplatte aus Fig.1 gebildet sein.
Anstatt dieser Einspannung ist bevorzugt vorgesehen, dass die Ankerelemente 11 formschlüssig gehalten sind, wie dies in den Fig. 1, 3 und 7 erkennbar ist. Sowohl die durch Einspannen als auch die durch einen Formschluss gehaltene Ventilplatte ist gemäß den Pfeilen Pf1 vorgespannt. Dadurch wird erreicht, dass bei einer Randeinspannung (Fig. 2) auftretende Verformungen des Ventilplattenrandes beziehungsweise der Ankerelemente kompensiert werden und sich nicht nachteilig auf den Schließkörper 9 auswirken. Weiterhin wird erreicht, dass sich die Ventilplatte ohne Druckbeaufschlagung immer in der Ausgangsposition befindet.

In Fig. 2 ist erkennbar, dass auf der einen Seite der Ventilplatte 8 ein Zuströmkanal 14 endet, dessen Mündung einen Ventilsitz 15 bildet, der von der Ventilplatte 8 beziehungsweise dessen Schließkörper 9 beaufschlagbar ist. Bevorzugt ist vorgesehen, dass der Schließkörper 9 in Ausgangsposition den Ventilsitz 15 beaufschlagt und damit den Zuströmkanal 14 abdichtet. Es ist somit eine entsprechende Rückflussdichtigkeit vorhanden. Um die Dichtfunktion zu verbessern, kann der Ventilsitz 15 über die Ebene 16 der randseitigen Halterung der Ventilplatte 8 überstehen, so dass der Ventilsitz durch die auf die Ventilplatte 8 einwirkende Vorspannung (Pfeile Pf1) von der Ventilplatte 8 beziehungsweise dem Schließkörper 9 unter Vorspanndruck beaufschlagt wird. In Fig. 2 sind zur Verdeutlichung etwas übermaßstäblich der Überstand h des Ventilsitzes 15 über die Ebene 16 dargestellt. Bei einer Kleinstpumpe mit einer Ventilplatte, die einen Schließkörper von beispielsweise 2,5 mm Durchmesser hat, genügt ein kleiner Überstand h des Ventilsitzes 15 über die Ebene 16, um eine ausreichende Dichtwirkung zu erzielen. Die Dicke der Ventilplatte kann hierbei etwa 0,5 mm betragen.

Fig. 3 zeigt eine formschlüssige Halterung der Ventilplatte 8, wobei die als Querstege ausgebildeten Ankerelemente 11 Wandabschnitte 17 hintergreifen. Strichliniert sind die Ankerelemente 11 in entspannter Lage dargestellt, während die durchgezogene Darstellung ihre Lage in Betriebsposition zeigt, wo die Ankerelemente 11 formschlüssig gehalten sind und wobei in dieser Betriebslage die Zugspannungen gemäß den Pfeilen Pf1 aufgebaut sind. Dies wird erreicht, indem der Abstand a der Ankerelemente-Aufnahmen (Wandabschnitte 17) größer ist als der Abstand b der Ankerelemente in entspannter Lage (strichliniert). Die Vorspannung gemäß den Pfeilen Pf1 wird aufgebaut, indem die Ventilplatte 8 mit ihren Ankerelementen 11 die Wandabschnitte 17 hintergreifend eingesetzt wird.

Die Formgebung der Ankerelemente 11 ist bevorzugt wie in den Fig. 1, 3, 4, und 8 vorgesehen, wobei jedoch auch die Möglichkeit besteht, anstatt dieser zusammen mit den Ventilstegen 10 gebildeten T-Form auch L-förmige, kreis- oder kugelförmige Ankerelemente vorzusehen. Fig. 5 zeigt eine solche Ausführungsvariante, bei der das Ankerelement 11 kreisscheibenförmig, gegebenenfalls auch kugelförmig ausgebildet ist. T-förmige Ankerelemente können mit gerundetem Verlauf wie in den Fig. 3, 4 und 8 dargestellt oder mit geradem Verlauf, wie in den Fig. 1 und 6 dargestellt, ausgebildet sein. Bei den gewölbten Ausführungsformen kann die Vorspannkraft dadurch erzeugt werden, dass zur formschlüssigen Aufnahme der Ankerelemente 11 gerade Aufnahmen, wie in Fig. 3 gezeigt vorgesehen sind, so dass die Vorspannung durch Verformen der Ankerelemente 11 in Richtung zu einer geraden Form aufgebaut wird. Es besteht aber auch die Möglichkeit, Aufnahmen für die Ankerelemente 11 vorzusehen, die in ihrem Verlauf etwa dem entspannten Verlauf der Ankerelemente 11 entsprechen, jedoch voneinander einen größeren Abstand a aufweisen als gegenüberliegende Ankerelemente 11.
Fig. 7 zeigt eine Darstellung, bei der die Vorspannung durch Auflagenoppen 18 erreicht wird, durch die die Ankerelemente 11 etwas aus ihrer entspannten Lage aufgebogen werden, so dass dadurch die Zugspannung innerhalb der Ventilplatte oder zumindest der Ventilstege 10 aufgebaut wird.

In Fig. 1 ist in einem konkreten Ausführungsbeispiel gut die Lage einer formschlüssig gehaltenen Ventilplatte 8 als Teil des Auslassventils 1b erkennbar. In der Basisplatte 6 des Pumpenkopfes 2 sind Einformungen zur flachseitig etwa bündigen Aufnahme der Ventilplatte 8 vorgesehen.
Zentral befindet sich dabei eine Vertiefung 19 mit einem etwas größeren Durchmesser als dem des hier runden Schließkörpers 9 der Ventilplatte, innerhalb dem sich der Schließkörper 9 zwischen einer Schließstellung und einer Offenstellung hin und her bewegen kann. Strichliniert ist der unterhalb des Schließkörpers 9 befindliche Ventilsitz 15 eines mit dem Pumpenraum verbundenen Zuströmkanals erkennbar. Der Schließkörper 9 liegt in Ruhelage und während der Ansaugphase der Pumpe dichtend auf dem Ventilsitz 15 auf.

Seitlich an die Vertiefung 19 schließen sich Aufnahmenuten 20 für die Ventilstege 10 an, die in Aufnahmevertiefungen 21 für die Ankerelemente 11 übergehen. Die Tiefe der Aufnahmenuten 20 und auch der Aufnahmevertiefungen 21 entsprechen etwa der Dicke der Ventilplatte 8, so dass diese einerseits formschlüssig gehalten ist und andererseits mit der Oberseite der Basisplatte 6 etwa abschließt. Die Tiefe dieser Einformungen ist dabei vorzugsweise so bemessen, dass sich bei aufgesetzter Abdeckplatte ein minimales Spiel ergibt, so dass außer der Vorspannung durch die Ankerelemente keine anderen Kräfte auf das Ventil einwirken. Der Einbau ist dadurch besonders einfach und toleranzunabhängig. Die Ventilfunktion wird dadurch besonders prozesssicher.

In der hier nicht gezeigten Abdeckplatte, die sich in Funktionsstellung oberhalb der Basisplatte 6 befindet, sind gegenüberliegend zu den in der Basisplatte 6 vorgesehenen Einformungen Gegeneinformungen vorgesehen, die für das Auslassventil 1b etwa wie die Einformungen in der Basisplatte 6 zur Bildung eines Einlassventils 1a aussehen, während die in der Abdeckplatte vorgesehenen Gegeneinformungen für das Einlassventil 1a etwa den für das Auslassventil 1b vorgesehenen Formungen in der Basisplatte 6 entsprechen.
Die Gegeneinformung in der Abdeckplatte zur Bildung des Auslassventils 1b weist eine etwa der Vertiefung 19 entsprechende, zentrale Vertiefung auf, durch die die Beweglichkeit des Schließkörpers 9 in Offenstellung ermöglicht ist. An die zur Gegeneinformung der Abdeckplatte gehörenden Vertiefung schließen sich Übergangseinformungen 22 an, so wie dies auch bei den Einformungen zur Bildung des Einlassventils 1a in der Basisplatte 6 vorgesehen ist. Ebenfalls kann die Gegeneinformung des Auslassventils 1b in der nicht dargestellten Abdeckplatte einen Anschlagnocken 23 sowie eine im Bereich der Vertiefung vorgesehene Öffnung 24, die zu einem Auslassstutzen führt, aufweisen. Prinzipiell vergleichbar wären auch diese Teile mit denen des Einlassventils 1a in der Basisplatte 5. Bei dem Einlassventil 1a führt die Öffnung 24 allerdings zum Pumpenraum. Die vorerwähnten Übergangseinformungen in der Gegen-Einformung der dem Auslassventil 1b gegenüberliegenden Gegen-Einformung (vgl. Übergangseinformungen 22 des Einlassventils 1a in der Basisplatte 6) führen außen zu Abdeckflächen 25, ebenfalls vergleichbar mit denen des Einlassventils 1a der Basisplatte 6.

Die in den Kopfplatten also in der Basisplatte 6 und in der auf diese aufsetzbaren Abdeckplatte vorgesehenen Einformungen zur Bildung der Ein- und Auslassventile und zur Aufnahme und Halterung von Ventilplatten 8 sind jeweils durch eine Dichtzone 26 zum Abdichten des jeweiligen Ventilbereichs sowie der beiden benachbarten Kopfplatten umgrenzt. In diesen Dichtzonen 26 können Nuten 27 zur Aufnahme eines hier nicht dargestellten Dichtringes vorgesehen sein. Im Ausführungsbeispiel ist die Nut 27 zur Umgrenzung des Bereiches des Einlassventils 1a so tief ausgebildet, dass dort ein Dichtring eingesetzt und gehalten ist und entweder durch die Flachseite der aufsetzbaren Abdeckplatte oder eine dort ebenfalls vorgesehene, gegebenenfalls weniger tiefe Nut 27 abdichtet. Praktisch komplementär zu dieser Anordnung ist zur Umgrenzung des Bereiches des Auslassventils 1b bei der Dichtzone 26 in der hier nicht dargestellten Abdeckplatte eine etwas tiefere Nut 27 zur Aufnahme eines Dichtringes vorgesehen, während in der Basisplatte 6 wiederum die Flachseite dieser Basisplatte 6 oder eine weniger tiefe Nut 27 vorgesehen sind. Durch diese, die Ventilbereiche umgrenzenden Abdichtungen ist eine klare Trennung einerseits der Ventilfunktionen und andererseits der Dichtfunktion zwischen den beiden benachbarten Kopfplatten (Basisplatte, Abdeckplatte) vorhanden.

Die Basisplatte 6 und die darauf aufsetzbare Abdeckplatte jeweils mit den zur Bildung der Ventile vorgesehenen Einformungen und Gegeneinformungen sind bevorzugt als Spritzgießteile ausgebildet. Dadurch ist eine gleichbleibend gute Fertigungsqualität auch bei großen Stückzahlen sichergestellt.
Als Werkstoff für die Ventilplatte kommt ein gummiartiges, elastisches Material in Frage.

## Patentansprüche

1. Ventil, insbesondere Plattenventil beispielsweise für Membranpumpen, mit einer Ventilplatte (8), einem Ventilsitz (15) und einem von einem Ventilgehäuse umgrenzten Ventilraum, wobei die Ventilplatte randseitig gehalten ist, **dadurch gekennzeichnet, dass** die ventilplatte (8) in Einbaulage zwischen ihren äußeren Randhalterungen elastisch auf Zug vorgespannt ist und dass die elastische Vorspannung mindestens so groß ist, dass durch eine Randeinspannung auftretende Verformungen kompensiert werden.

2. Ventil nach Oberbegriff von Anspruch 1, **dadurch gekennzeichnet, dass** die Ventilplatte (8) randseitig formschlüssig gehalten ist und zwischen ihren äußeren Randhalterungen in Einbaulage elastisch auf Zug vorgespannt ist.

3. Ventil nach Anspruch 1 oder 2, **dadurch gekennzeichnet, dass** der Ventilsitz (15) über die Ebene der randseitigen Halterung der Ventilplatte (8) übersteht, so dass die Ventilplatte (8) den Ventilsitz (15) in Ruhestellung des Ventils beaufschlagt.

4. Ventil nach einem der Ansprüche 2 bis 4, **dadurch gekennzeichnet, dass** die Ventilplatte (8) einen plattenförmigen Schließkörper (9) und mit diesem verbundene seitliche Ventilstege (10) mit an deren Enden befindlichen Ankerelementen (11) zur Halterung in beziehungsweise an dem Ventilgehäuse aufweist.

5. Ventil nach Anspruch 4, **dadurch gekennzeichnet, dass** die seitlichen Ventilstege (10) und die Ankerelemente (11) mit dem Schließkörper einstückig verbunden sind.

6. Ventil nach Anspruch 4 oder 5, **dadurch gekennzeichnet, dass** wenigstens zwei Ventilstege (10) vorgesehen sind, vorzugsweise zwei diametral an dem Schließkörper gegenüberliegend angeordnete Ventilstege (10), die jeweils mit einem Ankerelement versehen sind.

7. Ventil nach einem der Ansprüche 2 bis 6, **dadurch gekennzeichnet, dass** die Ankerelemente (11) eine gegenüber dem Ventilsteg (10) abgewinkelte Form aufweisen und zusammen mit dem jeweiligen Ventilsteg (10) insbesondere L-förmig, T-förmig oder dergleichen ankerförmig oder etwa kreis- oder kugelförmig ausgebildet sind.

8. Ventil nach einem der Ansprüche 1 bis 7, **dadurch gekennzeichnet, dass** der plattenförmige Schließkörper (9) der Ventilplatte (8) einen runden oder gerundeten Umriss aufweist.

9. Ventil nach einem der Ansprüche 2 bis 8, **dadurch gekennzeichnet, dass** eine zum Ventil gehörende Halterung für die Ventilplatte (8) vorgesehen ist, die Aufnahmen für die Ankerelemente (11) der Ventilplatte (8) aufweist und dass der Abstand der Ankerelemente-Aufnahmen größer ist als der Abstand der Ankerelemente (11) der Ventilplatte (8) in entspannter Lage.

10. Ventil nach einem der Ansprüche 1 bis 9, **dadurch gekennzeichnet, dass** es Teil eines Pumpenkopfes einer Pumpe ist, dass der Pumpenkopf mehrere Kopfplatten aufweist, und dass in zwei benachbarten Kopfplatten auf einander zuweisenden Plattenseiten Einformungen zur Aufnahme und kraft- oder formschlüssigen Halterung von vorzugsweise zwei nebeneinander angeordneten Ventilplatten (8) vorgesehen sind.

11. Ventil nach Anspruch 10, **dadurch gekennzeichnet, dass** die in den Kopfplatten vorgesehenen Einformungen zur Aufnahme von Ventilplatten (8) jeweils durch eine dazu beabstandete Dichtzone (26) zum Abdichten des Ventilbereichs sowie einer benachbarten Kopfplatte umgrenzt ist.

12. Ventil nach Anspruch 11, **dadurch gekennzeichnet, dass** in der den Ventilbereich umgrenzenden Dichtzone (26) eine Nut (27) zur Aufnahme eines Dichtringes vorgesehen ist.

13. Ventil nach einem der Ansprüche 10 bis 12, **dadurch gekennzeichnet, dass** die in den Kopfplatten vorgesehenen Einformungen zur Aufnahme von Ventilplatten (8) jeweils eine Vertiefung (19) zur beweglichen Aufnahme des plattenförmigen Schließkörpers (9) und seitlich anschließend Ankerelemente-Aufnahmen aufweisen.

14. Ventil nach einem der Ansprüche 11 bis 13, **dadurch gekennzeichnet, dass** von den direkt gegenüberliegenden Einformungen in den benachbarten Kopfplatten eine erste Einformung zur Aufnahme und formschlüssigen Halterung jeweils einer Ventilplatte (8) mit flachseitig etwa bündigen Aufnahme der Ventilplatte (8) und die andere Gegeneinformung zumindest zur Abdeckung der Ankerelemente-Aufnahmen der ersten Einformung ausgebildet sind.

15. Ventil nach einem der Ansprüche 10 bis 14, **dadurch gekennzeichnet, dass** eine der Kopfplatten eine Basisplatte (6) bildet, die als Teil eines Auslassventils (1b) eine Einformung zur flachseitig etwa bündigen Aufnahme einer Ventilplatte (8) aufweist, dass seitlich neben der Auslassventil-Einformung als Teil eines Einlassventils (1a) eine Einformung und Formung zumindest zur Abdeckung der Ankerelemente-Aufnahmen der in der gegenüberliegenden Kopfplatte befindlichen Einformung vorgesehen ist und dass in der benachbarten, eine Abdeckplatte bildenden Kopfplatte für das Auslassventil einerseits und das Einlassventil andererseits zu den Einformungen in der Basisplatte passende Gegeneinformungen vorgesehen sind.

16. Ventil nach einem der Ansprüche 13 bis 15, **dadurch gekennzeichnet, dass** bei der Einformung in der einen Kopfplatte im Bereich der Vertiefung (19) zur Aufnahme des Schließkörpers (9) ein von dem Schließkörper der Ventilplatte (8) beaufschlagbarer Ventilsitz (15) und im Bereich der Vertiefung der anderen Kopfplatte vorzugsweise ein Hubanschlag (23) für den Schließkörper (9) sowie die Mündung eines Einlasskanals (24) vorgesehen sind.

17. Ventil nach einem der Ansprüche 10 bis 16, **dadurch gekennzeichnet, dass** die Kopfplatten mit den Einformungen für die Ventile Spritzgießteile sind.

18. Ventil nach einem der Ansprüche 10 bis 17, **dadurch gekennzeichnet, dass** als Werkstoff für die Ventilplatte (8) ein gummiartiges, elastisches Material vorgesehen ist.

19. Ventil nach einem der Ansprüche 1 oder 4 bis 18, **dadurch gekennzeichnet, dass** die mit dem plattenförmigen Schließkörper (9) der Ventilplatte (8) verbundenen Ventilstege (10) an ihren äußeren Enden eingespannt sind und dass die elastische Vorspannung der Ventilplatte (8) mindestens so groß ist, dass durch diese Einspannungen auftretende Verformungen kompensiert werden und/oder dass der Abstand der Einspannungen so groß ist, dass auftretende Verformungen außerhalb des Schließkörpers (9) liegen.

## Claims

1. Valve, particularly a plate valve, for example for diaphragm pumps, having a valve plate (8), a valve seat (15) and a valve chamber surrounded by a valve housing, the valve plate being secured at its edges, **characterised in that** in the installed position the valve plate (8) is elastically pre-tensioned between its outer edge clamps and **in that** the elastic pre-tension is at least great enough to compensate any deformations occurring as a result of clamping of the edges.

2. Valve according to the precharacterising clause of claim 1, **characterised in that** the valve plate (8) is held by interlocking engagement at its edges and is elastically pre-tensioned between its outer edge clamps in the installed position.

3. Valve according to claim 1 or 2, **characterised in that** the valve seat (15) projects over the plane of the edge clamp of the valve plate (8) such that the valve plate (8) acts upon the valve seat (15) in the resting position of the valve.

4. Valve according to one of claims 2 to 4, **characterised in that** the valve plate (8) comprises a plate-shaped sealing member (9) and, connected thereto, lateral valve webs (10) with anchor elements (11) at their ends for clamping in or on the valve housing.

5. Valve according to claim 4, **characterised in that** the lateral valve webs (10) and the anchor elements (11) are integrally connected to the sealing member.

6. Valve according to claim 4 or 5, **characterised in that** at least two valve webs (10) are provided, preferably two valve webs (10) arranged diametrically opposite one another on the sealing member and each provided with an anchor element.

7. Valve according to one of claims 2 to 6, **characterised in that** the anchor elements (11) are bent in shape relative to the valve web (10) and together with the respective valve web (10) are in particular of L-shaped, T-shaped or similarly anchor-shaped or possibly circular or spherical in construction.

8. Valve according to one of claims 1 to 7, **characterised in that** the plate-shaped sealing member (9) of the valve plate (8) has a round or rounded contour.

9. Valve according to one of claims 2 to 8, **characterised in that** a clamp belonging to the valve is provided for the valve plate (8), which has receptacles for the anchor elements (11) of the valve plate (8) and **in that** the spacing between the anchor element receptacles is greater than the spacing between the anchor elements (11) of the valve plate (8) in the non-tensioned position.

10. Valve according to one of claims 1 to 9, **characterised in that** it is part of a pump head of a pump, **in that** the pump head has a plurality of head plates, and **in that**, in two adjacent head plates, on plate sides facing one another, indentations are provided for receiving and securing preferably two valve plates (8) arranged side by side, by frictional or interlocking engagement.

11. Valve according to claim 10, **characterised in that** the indentations provided in the head plates for accommodating the valve plates (8) are each bounded by a sealing zone (26) spaced therefrom, for sealing off the valve region and an adjacent head plate.

12. Valve according to claim 11, **characterised in that** a groove (27) for accommodating a sealing ring is provided in the sealing zone (26) surrounding the valve region.

13. Valve according to one of claims 10 to 12, **characterised in that** the indentations provided in the head plates for receiving valve plates (8) each comprise a depression (19) for movably accommodating the plate-shaped sealing member (9) and laterally adjacent anchor element receptacles.

14. Valve according to one of claims 11 to 13, **characterised in that**, of the directly opposite indentations in the adjacent head plates, a first indentation is designed to accommodate a valve plate (8) by interlocking engagement, the valve plate (8) being held substantially flush on its surface, and the other counter-indentation is designed to at least cover the anchor element receptacles of the first indentation.

15. Valve according to one of claims 10 to 14, **characterised in that** one of the head plates forms a base plate (6) which, as part of an outlet valve (1b), comprises an indentation for accommodating a valve plate (8) in a substantially flush position on its surface, **in that** laterally adjacent to the outlet valve indentation as part of an inlet valve (1a) an indentation and formation is provided for at least covering the anchor element receptacles of the indentation provided in the opposing head plate, and **in that** in the adjacent head plate forming a cover plate for the outlet valve on the one hand and the inlet valve on the other hand, counter-indentations are provided which match the indentations in the base plate.

16. Valve according to one of claims 13 to 15, **characterised in that** in the indentation in one head plate, in the region of the depression (19) for accommodating the sealing member (9), there is provided a valve seat (15) which can be acted upon by the sealing member of the valve plate (8) and in the region of the depression in the other head plate there is preferably a stop (23) for the stroke of the sealing member (9) and the mouth of an inlet channel (24).

17. Valve according to one of claims 10 to 16, **characterised in that** the head plates comprising the indentations for the valves are injection moulded parts.

18. Valve according to one of claims 10 to 17, **characterised in that** a rubbery elastic material is provided as the material for the valve plate (8).

19. Valve according to one of claims 1 or 4 to 18, **characterised in that** the valve webs (10) connected to the plate-shaped sealing member (9) of the valve plate (8) are clamped at their outer ends and **in that** the elastic pre-tensioning of the valve plate (8) is at least great enough such that these clamps compensate for any deformation occurring and/or the spacing of the clamps is so great that any deformations occurring are located outside the sealing member (9).

## Revendications

1. Soupape, en particulier soupape à disque, par exemple pour des pompes à diaphragme, avec un disque de soupape (8), un siège de soupape (15) et une chambre de soupape circonscrite par un boîtier de soupape, le disque de soupape étant maintenu sur les bords, **caractérisée en ce que** le disque de soupape (8) est, en position installée, précontraint élastiquement en traction entre ses supports de bords extérieurs, et **en ce que** la précontrainte élastique est au moins suffisante pour compenser les déformations dues au serrage des bords.

2. Soupape selon le préambule de la revendication 1, **caractérisée en ce que** le disque de soupape (8) est maintenu sur les bords par engagement positif et est, en position installée, précontraint élastiquement en traction entre ses supports de bords extérieurs.

3. Soupape selon la revendication 1 ou 2, **caractérisée en ce que** le siège de soupape (15) dépasse du plan du support de bord du siège de soupape (15), de sorte que le disque de soupape (8) sollicite le siège de soupape (15) dans la position de repos de la soupape.

4. Soupape selon l'une des revendications 2 à 4, **caractérisée en ce que** le disque de soupape (8) présente un obturateur (9) en forme de disque et des nervures de soupape latérales (10) reliées à ce dernier et aux extrémités desquelles se trouvent des éléments d'ancrage (11) pour le maintien dans ou sur le boîtier de soupape.

5. Soupape selon la revendication 4, **caractérisée en ce que** les nervures de soupape latérales (10) et les éléments d'ancrage (11) sont reliés d'un seul tenant à l'obturateur.

6. Soupape selon la revendication 4 ou 5, **caractérisée en ce qu'**il est prévu au moins deux nervures de soupape (10), de préférence deux nervures de soupape (10) disposées sur l'obturateur en étant diamétralement opposées, qui sont chacune pourvues d'un élément d'ancrage.

7. Soupape selon l'une des revendications 2 à 6, **caractérisée en ce que** les éléments d'ancrage (11) présentent une forme coudée par rapport à la nervure de soupape (10) et sont notamment réalisés conjointement avec la nervure de soupape respective (10) en forme de L, en forme de T ou sous une forme d'ancre analogue, ou approximativement sous une forme circulaire ou sphérique.

8. Soupape selon l'une des revendications 1 à 7, **caractérisée en ce que** l'obturateur en forme de disque (9) du disque de soupape (8) présente un contour rond ou arrondi.

9. Soupape selon l'une des revendications 2 à 8, **caractérisée en ce qu'**il est prévu pour le disque de soupape (8) un support faisant partie de la soupape et présentant des logements pour les éléments d'ancrage (11) du disque de soupape (8), et **en ce que** la distance entre les logements d'éléments d'ancrage est supérieure à la distance entre les éléments d'ancrage (11) du disque de soupape (8) dans la position détendue.

10. Soupape selon l'une des revendications 1 à 9, **caractérisée en ce qu'**elle fait partie d'une tête de pompe d'une pompe, **en ce que** la tête de pompe présente plusieurs plaques de tête, et **en ce que** des formations en creux sont prévues dans deux plaques de tête voisines sur des côtés de plaque en vis-à-vis pour recevoir et maintenir à force et par engagement positif, de préférence, deux disques de soupape (8) disposés l'un à côté de l'autre.

11. Soupape selon la revendication 10, **caractérisée en ce que** les formations en creux prévues dans les plaques de tête pour recevoir des disques de soupape (8) sont respectivement circonscrites par une zone d'étanchéité (26) qui en est distante et qui est destinée à étancher la région de la soupape ainsi qu'une plaque de tête voisine.

12. Soupape selon la revendication 11, **caractérisée en ce qu'**une rainure (27) destinée à recevoir une bague d'étanchéité est prévue dans la zone d'étanchéité (26) circonscrivant la région de la soupape.

13. Soupape selon l'une des revendications 10 à 12, **caractérisée en ce que** les formations en creux prévues dans les plaques de tête pour recevoir des disques de soupape (8) présentent chacune un renfoncement (19) destiné à recevoir à déplacement l'obturateur (9) en forme de disque et auquel se raccordent latéralement des logements d'éléments d'ancrage.

14. Soupape selon l'une des revendications 11 à 13, **caractérisée en ce que**, parmi les formations en creux directement opposées dans les plaques de tête voisines, une première formation en creux est conçue pour recevoir et maintenir en engagement positif un disque de soupape respectif (8) en recevant du côté plat approximativement en affleurement le disque de soupape (8), et l'autre formation en creux, complémentaire, est conçue au moins pour recouvrir les logements d'éléments d'ancrage de la première formation en creux.

15. Soupape selon l'une des revendications 10 à 14, **caractérisée en ce qu'**une des plaques de tête constitue une plaque de base (6) qui, en tant que partie d'une soupape d'échappement (1b), présente une formation en creux pour recevoir du côté plat approximativement en affleurement le disque de soupape (8), **en ce que**, sur le côté de la formation en creux de soupape d'échappement, il est prévu, en tant que partie d'une soupape d'admission (1a), une formation en creux et en relief au moins pour recouvrir les logements d'éléments d'ancrage de la formation en creux se trouvant dans la plaque de tête opposée, et **en ce que**, dans la plaque de tête voisine constituant une plaque de recouvrement, il est prévu pour la soupape d'échappement d'une part et pour la soupape d'admission d'autre part des formations en creux complémentaires adaptées aux formations en creux dans la plaque de base.

16. Soupape selon l'une des revendications 13 à 15, **caractérisée en ce que**, dans la formation en creux dans l'une des plaques de tête, il est prévu, dans la région du renfoncement (19) destiné à recevoir l'obturateur (9), un siège de soupape (15) pouvant être sollicité par l'obturateur du disque de soupape (8), et dans la région du renfoncement de l'autre plaque de tête, il est prévu de préférence une butée de déplacement (23) pour l'obturateur (9), ainsi que l'embouchure d'un canal d'admission (24).

17. Soupape selon l'une des revendications 10 à 16, **caractérisée en ce que** les plaques de tête munies des formations en creux pour les soupapes sont des pièces moulées par injection.

18. Soupape selon l'une des revendications 10 à 17, **caractérisée en ce qu'**il est prévu comme matériau pour le disque de soupape (8) un matériau élastique du genre caoutchouc.

19. Soupape selon l'une des revendications 1 ou 4 à 18, **caractérisée en ce que** les nervures de soupape (10) reliées à l'obturateur en forme de disque (9) du disque de soupape (8) sont serrées à leurs extrémités extérieures, et **en ce que** la précontrainte élastique du disque de soupape (8) est au moins suffisante pour compenser les déformations dues à ces serrages, et/ou **en ce que** la distance entre les serrages est suffisante pour que les déformations qui surviennent se situent en dehors de l'obturateur (9).
